# EUROPÄISCHE PATENTSCHRIFT

(11) **EP 2 590 859 B1**
(45) Veröffentlichungstag und Bekanntmachung des Hinweises auf die Patenterteilung: **25.06.2014**
(21) Anmeldenummer: 11730225.7
(22) Anmeldetag: 05.07.2011
(51) Int. Cl.: B64C 1/06, B64D 47/00

(54) **INTERIEURKOMPONENTENTRÄGERSYSTEM, FLUGZEUGINTERIEURKOMPONENTENMODUL UND MONTAGEVERFAHREN**
INTERIOR COMPONENTS CARRIER SYSTEM, AIRCRAFT INTERIOR COMPONENT MODULE AND MOUNTING METHOD
SYSTÈME DE SUPPORT D'ÉLÉMENTS INTÉRIEURS, MODULES D'ÉLÉMENTS INTÉRIEURS DANS UN AÉRONEF ET PROCÉDÉ DE MONTAGE

(30) Priorität: 09.07.2010 US 362963 P; 09.07.2010 DE 102010026683
(43) Veröffentlichungstag der Anmeldung: 15.05.2013
(73) Patentinhaber: Airbus Operations GmbH, 21129 Hamburg (DE)
(72) Erfinder: UMLAUFT, Sebastian, 22767 Hamburg (DE); HUMFELDT, Dirk, 22607 Hamburg (DE); OLLESCH, Thomas, 22399 Hamburg (DE); SCHWENGER, Mathias, 72793 Pfullingen (DE)
(74) Vertreter: Schicker, Silvia
(86) Internationale Anmeldenummer: PCT/EP2011/003335
(87) Internationale Veröffentlichungsnummer: WO 2012/003964

(56) Entgegenhaltungen:
- EP-A2- 0 983 938
- DE-A1- 3 904 375
- DE-A1-102005 054 890
- US-A- 5 549 258

## Beschreibung

Die Erfindung betrifft ein Interieurkomponententrägersystem, die dazu dient eine Mehrzahl von Flugzeuginterieurkomponenten zu einem Flugzeuginterieurkomponentenmodul zu verbinden und das Flugzeuginterieurkomponentenmodul an einer Flugzeugstruktur zu befestigen. Ferner betrifft die Erfindung ein mit einem derartigen Interieurkomponententrägersystem ausgestattetes Flugzeuginterieurkomponentenmodul sowie ein Verfahren zur Montage eines derartigen Flugzeuginterieurkomponentenmoduls in einem Flugzeug.

DE 10 2005 054 890 ein System, Modul und Verfahren entsprechend der Präambel der Ansprüche 1, 8 und 15.

Bei der Montage von Interieurkomponenten in einem Flugzeug ist es derzeit üblich, Bauteile, wie z.B. Dadopaneele, Seitenverkleidungen, Deckenverkleidungen, Lichtbänder, Gepäckfächer und dergleichen einzeln mit der Flugzeugstruktur zu verbinden. Da jedes Bauteil separat positioniert und an der Flugzeugstruktur befestigt werden muss, ist die Montage dieser Bauteile sehr zeitaufwendig. In ähnlicher Weise werden derzeit auch beispielsweise als luftführende Leitungen einer Flugzeugklimaanlage oder der Wasserversorgung in einer Flugzeugkabine dienende Rohrleitungen sowie elektrische Leitungen in zeitaufwändiger Weise einzeln an der Flugzeugstruktur befestigt. Nach der Montage muss im Rahmen einer Endkontrolle die ordnungsgemäβe Funktion aller Leitungen überprüft werden. Insbesondere müssen alle Rohrleitungen einer Dichtigkeitsprüfung unterzogen werden, während bei den elektrischen Leitungen eine Überprüfung aller Schnittstellen erforderlich ist. Diese Tests sind ebenfalls verhältnismäßig aufwändig, da die zu prüfenden Leitungen und Schnittstellen im montierten Zustand der Leitungen häufig nur schwer zugänglich sind.

Aus diesem Grund gibt es Bestrebungen, zur Montage in einem Flugzeug, beispielsweise in einer Flugzeugkabine, vorgesehene Interieurkomponenten so umfassend wie möglich außerhalb des Flugzeugs vorzumontieren und zu testen. Insbesondere sollen Module, die mindestens ein Überkopfgepäckfach, mindestens ein Seitenverkleidungspaneel sowie weitere Interieurkomponenten, wie z.B. elektrische Leitungen, luftführende Leitungen einer Flugzeugklimaanlage oder der Wasserversorgung in der Flugzeugkabine dienende Rohrleitungen, Beleuchtungselemente, Personal Service Units und Personal Service Channels umfassen können, ggf. mit Hilfe eines in der DE 10 2009 023 391 beschriebenen Montagegestells außerhalb des Flugzeugs vormontiert und getestet werden. Anschließend sollen die Module mittels einer in der DE 10 2009 023 393 beschriebenen Transportvorrichtung in eine Endmontageposition in einem Flugzeugrumpfelement transportiert werden. In dem Flugzeugrumpfelement sollen die Module schließlich auf möglichst einfache und zeitsparende Art und Weise mit der Flugzeugstruktur verbunden werden. Hierzu können in der DE 10 2009 023 400 und der DE 10 2009 023 401 beschriebene Haltersysteme zum Einsatz kommen.

Die Erfindung ist auf die Aufgabe gerichtet, ein leichtgewichtiges Interieurkomponententrägersystem, bereitzustellen, die es ermöglicht, eine Mehrzahl von zur Montage in einem Flugzeug vorgesehenen Interieurkomponenten auf einfache, sichere und zeitsparende Art und Weise zu einem Flugzeuginterieurkomponentenmodul zu verbinden und das Flugzeuginterieurkomponentenmodul an einer Flugzeugstruktur zu befestigen. Ferner ist die Erfindung auf die Aufgabe gerichtet, ein mit einem derartigen Interieurkomponententrägersystem ausgestattetes Flugzeuginterieurkomponentenmodul sowie ein Verfahren zur Montage eines derartigen Flugzeuginterieurkomponentenmoduls in einem Flugzeug anzugeben.

Diese Aufgabe wird durch ein Interieurkomponententrägersystem mit den Merkmalen des Anspruchs 1, ein Flugzeuginterieurkomponentenmodul mit den Merkmalen des Anspruchs 8 sowie ein Verfahren zur Montage eines Flugzeuginterieurkomponentenmoduls in einem Flugzeugs mit den Merkmalen des Anspruchs 15 gelöst.

Ein erfindungsgemäßes, zur Verwendung bei der Montage von Flugzeuginterieurkomponenten in einem Flugzeug geeignetes Interieurkomponententrägersystem umfasst ein Haltesystem mit mindestens einem Halteelement. An dem Halteelement ist eine erste Verbindungsvorrichtung zur Verbindung des Halteelements mit einer ersten Flugzeuginterieurkomponente vorgesehen. Ferner ist an dem Halteelement eine zweite Verbindungsvorrichtung vorgesehen. Die erste Verbindungsvorrichtung kann beispielsweise im Bereich eines ersten Endes des Halteelements positioniert sein. Die zweite Verbindungsvorrichtung kann dagegen beispielsweise im Bereich eines dem ersten Ende gegenüberliegenden zweiten Ende des Halteelements vorgesehen sein. Ferner ist an dem Halteelement ein Strukturhalter zur Befestigung des Halteelements an einer Flugzeugstruktur vorgesehen. Bei dem Strukturhalter kann es sich beispielsweise um einen in der DE 10 2009 023 400 beschriebenen Strukturhalter handeln. Ferner umfasst das erfindungsgemäße Interieurkomponententrägersystem ein Scharnier, das mit einer zweiten sowie einer dritten Flugzeuginterieurkomponente verbindbar ist. Insbesondere dient das Scharnier dazu, die zweite und die dritte Flugzeuginterieurkomponente derart miteinander zu verbinden, dass die dritte Flugzeuginterieurkomponente um eine Längsachse des Scharnier relativ zu der zweiten Flugzeuginterieurkomponente verschwenkbar ist. Die an dem Halteelement angebrachte zweite Verbindungsvorrichtung ist dazu eingerichtet, mit dem Scharnier und/oder einem zu dem Scharnier benachbarten Bereich der zweiten und/oder der dritten Flugzeuginterieurkomponente verbunden zu werden.

Das Halteelement des Interieurkomponententrägersystems stellt somit eine Verbindung der ersten Flugzeuginterieurkomponente mit der zweiten sowie der dritten Flugzeuginterieurkomponente her. Ferner dient das Halteelement der Befestigung der ersten Flugzeuginterieurkomponente und folglich auch der zweiten sowie der dritten Flugzeuginterieurkomponente an der Flugzeugstruktur. Das Halteelement bildet somit eine zentrale Komponente des Interieurkomponententrägersystems, die die Doppelfunktion erfüllt, einerseits die Flugzeuginterieurkomponenten miteinander zu verbinden und andererseits für eine Befestigung der Flugzeuginterieurkomponenten an der Flugzeugstruktur zu sorgen. Mittels des erfindungsgemäßen Interieurkomponententrägersystems können somit mehrere Flugzeuginterieurkomponenten zu einem Flugzeuginterieurkomponentenmodul verbunden werden. Die Vormontage des Flugzeuginterieurkomponentenmoduls kann, falls gewünscht, komfortabel außerhalb des Flugzeugs erfolgen. Darüber hinaus ermöglicht das Interieurkomponententrägersystem eine einfache sichere und zeitsparende Montage des vormontierten Flugzeuginterieurkomponentenmoduls im Flugzeug. Mit Hilfe des erfindungsgemäßen Interieurkomponententrägersystems kann somit die Interieurkomponentenmontage in einem Flugzeug deutlich einfacher gestaltet werden. Ferner wird eine Qualitätssteigerung ermöglicht, da beispielsweise Toleranzen der einzelnen Interieurkomponenten bereits bei der Vormontage des Moduls ausgeglichen werden können.

An dem Halteelement kann ferner eine dritte Verbindungsvorrichtung zur Verbindung des Halteelements mit einer vierten Flugzeuginterieurkomponente und/oder eine vierte Verbindungsvorrichtung zur Verbindung des Halteelements mit einer fünften Flugzeuginterieurkomponente vorgesehen sein. Das Halteelement ermöglicht dann den Verzicht auf zusätzliche Bauteile zur Verbindung der vierten und/oder der fünften Flugzeuginterieurkomponente mit dem bereits die erste, die zweite und die dritte Flugzeuginterieurkomponente umfassenden Modul. Die Endmontage der Interieurkomponenten in dem Flugzeug wird dadurch weiter vereinfacht. Darüber hinaus wird das Gewicht des Moduls minimiert. Es versteht sich, dass weitere Interieurkomponenten, die auch elektrische Leitungen oder luftführende Leitungen umfassen können mit dem die erste, die zweite und die dritte Flugzeuginterieurkomponente umfassenden Modul verbunden werden können. Hierzu kann das Modul weitere Halteoder Befestigungssystem umfassen.

Das Haltesystem des erfindungsgemäßen Interieurkomponententrägersystems kann mindestens zwei Halteelemente umfassen. Die beiden Halteelement des Haltesystems weisen vorzugsweise im Wesentlichen die gleiche Grundform auf. Beispielsweise können die beiden Halteelemente eine im Wesentlichen langgestreckte, aber flache Grundform aufweisen. Damit die Halteelemente die ihnen zugedachte Halteund Stabilisierungsfunktion in einem mit dem erfindungsgemäßen Interieurkomponententrägersystem ausgestatteten Flugzeuginterieurkomponentenmodul erfüllen können, sind die Halteelemente vorzugsweise einstückig, d.h. ohne Gelenkpunkte oder dergleichen ausgebildet. Grundsätzlich können die Halteelemente aus verschiedenen, für den Einsatz im Flugzeugbau geeigneten Materialen bestehen. Beispielsweise können die Halteelemente aus Metall, vorzugsweise Aluminium oder einem Aluminiumlegierung gefertigt werden. Ein besonders geringes Gewicht bei gleichzeitig guten mechanischen Eigenschaften haben jedoch Halteelemente, die aus einem faserverstärkten Kunststoffmaterial, beispielsweise einem glasfaser- oder kohlefaserverstärkten Kunststoffmaterial bestehen.

Im mit der ersten Flugzeuginterieurkomponente, dem Scharnier, der zweiten und/oder der dritten Flugzeuginterieurkomponente verbundenen Zustand des Haltesystems erstrecken sich die beiden Halteelemente des Haltesystems vorzugsweise im Wesentlichen parallel zueinander. Mindestens eine an dem ersten Halteelement vorgesehene Verbindungsvorrichtung kann an einer ersten Seitenfläche des ersten Halteelements angebracht sein, die im mit der ersten Flugzeuginterieurkomponente, dem Scharnier, der zweiten und/oder der dritten Flugzeuginterieurkomponente verbundenen Zustand des Haltesystems einer ersten Seitenfläche des zweiten Halteelements zugewandt ist, an der eine entsprechende, an dem zweiten Halteelement vorgesehene Verbindungsvorrichtung angebracht ist. Mit anderen Worten, an den beiden Halteelementen vorgesehene Verbindungsvorrichtungen können einander gegenüber positioniert sein und gemeinsam ein Verbindungssystem zur sicheren Verbindung einer Flugzeuginterieurkomponente mit den Halteelementen bilden.

Die erste Verbindungsvorrichtung kann beispielsweise eine Verbindungsvorrichtung zur Verbindung des Halteelements mit einem Überkopfgepäckfach sein. Beispielsweise kann die erste Verbindungsvorrichtung eine Bohrung oder eine Mehrzahl von Bohrungen umfassen, die sich durch das Halteelement erstreckt/erstrecken und der Aufnahme eines geeigneten Befestigungsmittels, wie z.B. einer Schraube oder eines Niets dient/dienen. Das Halteelement kann dann beispielsweise an einer Seitenwand des Überkopfgepäckfachs befestigt werden, wobei dann beispielsweise ein Abschnitt der ersten Seitenfläche des Halteelements, an der mindestens eine weitere Verbindungsvorrichtung angebracht ist, an einer Außenfläche der Seitenwand des Überkopfgepäckfachs anliegt.

Die zweite Verbindungsvorrichtung kann eine Verbindungsvorrichtung zur Verbindung des Halteelements mit einem ein Cove-Light-Paneel mit einem Fensterpaneel verbindenden Scharnier, einem zu dem Scharnier benachbarten Bereich des Cove-Light-Paneels und/oder einem zu dem Scharnier benachbarten Bereich des Fensterpaneels sein. Die zweite Verbindungsvorrichtung kann beispielsweise im Wesentlichen L-förmig ausgestaltet sein. Ein erster Schenkel der L-förmig ausgestalteten zweiten Verbindungsvorrichtung kann dann beispielsweise durch Schrauben oder Nieten an dem Halteelement befestigt sein. Ein zweiter Schenkel kann sich dann beispielsweise in einem Winkel von ca. 90 Grad von dem ersten Schenkel und beispielsweise von der ersten Seitenfläche des Halteelements erstrecken und mit Bohrungen zur Aufnahme von Befestigungsmitteln in Form von Schrauben, Nieten oder dergleichen ausgestaltet sein. Die zweite Verbindungsvorrichtung kann auch mit einer geeigneten Rasteinrichtung versehen sein, die es ermöglicht, die zweite Verbindungsvorrichtung durch Verrasten mit dem Scharnier und/oder einem zu dem Scharnier benachbarten Bereich der zweiten und/oder der dritten Flugzeuginterieurkomponente zu verbinden. Vorzugsweise ist die zweite Verbindungsvorrichtung jedoch dazu vorgesehen, mit einem Scharnierelement des Scharniers zusammenzuwirken, um eine Verbindung zwischen dem Halteelement und dem Scharnier herzustellen.

Die dritte Verbindungsvorrichtung kann eine Verbindungsvorrichtung zur Verbindung des Halteelements mit einem Beleuchtungselement sein. Beispielsweise kann die dritte Verbindungsvorrichtung eine Befestigungsplatte umfassen, die vorzugsweise im Bereich der ersten Seitenfläche des Halteelements an das Halteelement geschraubt, genietet oder anderweitig mit dem Halteelement verbunden werden kann. Von der Befestigungsplatte kann sich ein im Wesentlichen U-förmiger Montageabschnitt erstrecken, der geeignet ist, ein beispielsweise langgestrecktes und einen im Wesentlichen rechteckigen Querschnitt aufweisendes Beleuchtungselement zu umgreifen. Die vierte Verbindungsvorrichtung kann eine Verbindungsvorrichtung zur Verbindung des Halteelements mit einem Luftauslasselement einer Flugzeugklimaanlage sein. Beispielsweise kann die vierte Verbindungsvorrichtung eine Befestigungsplatte umfassen, die durch Schrauben, Nieten oder dergleichen an dem Halteelement befestigt sein kann. Vorzugsweise ist die Befestigungsplatte an der ersten Seitenfläche des Halteelements befestigt. Von der Befestigungsplatte kann sich ein Steg erstrecken, wobei der Winkel zwischen der Befestigungsplatte und dem Steg von der gewünschten Position des Luftauslasselements abhängen und beispielsweise zwischen 80 und 120 Grad betragen kann. Mit dem Steg kann ein Montageabschnitt verbunden sein, der von Bohrungen zur Aufnahme von Befestigungsmitteln in Form von Schrauben, Nieten oder dergleichen durchsetzt ist und somit die Herstellung einer Verbindung zwischen der vierten Verbindungsvorrichtung und dem Luftauslasselement ermöglicht.

Vorzugsweise ist das Scharnier des Interieurkomponententrägersystems in Form eines Filmscharniers ausgebildet, das einen sich entlang der Längsachse des Scharniers erstreckenden Scharnierfilm umfasst. Der Scharnierfilm kann beispielsweise aus einem Kunststoffmaterial, insbesondere einem Polyurethanmaterial bestehen. Der Scharnierfilm kann jedoch auch aus einem anderen, zum Einsatz im Flugzeugbau geeigneten Material bestehen. Der Scharnierfilm kann transparent oder in der Farbe der an den Scharnierfilm angrenzenden Flugzeuginterieurkomponenten ausgeführt sein. Der Scharnierfilm kann sich über lediglich einen Teil der Längsachse des Scharniers erstrecken und gegebenenfalls auch mehrteilig ausgebildet sein. Vorzugsweise erstreckt sich der Scharnierfilm jedoch über die gesamte Längsachse des Scharniers bzw. über die gesamte Länge eines zwischen der zweiten und der dritten Flugzeuginterieurkomponente vorhandenen Montagespalts. Der Scharnierfilm ist dann nicht nur dazu geeignet, eine Relativbewegung zwischen der zweiten und der dritten Flugzeuginterieurkomponente zu ermöglichen, sondern deckt auch den zwischen der zweiten und der dritten Flugzeuginterieurkomponente vorhandenen Montagespalt ab, d.h. er verhindert das Eindringen von Schmutz oder Feuchtigkeit in den Montagespalt.

An dem Scharnierfilm können sich über einen Teil der Länge oder die gesamte Länge der Längsachse des Scharniers erstreckende Befestigungslaschen angebracht sein. Die Befestigungslaschen können einstückig mit dem Scharnierfilm ausgebildet sein und dienen der Befestigung des Scharnierfilms an der zweiten sowie der dritten Flugzeuginterieurkomponente. Beispielsweise können die Befestigungslaschen mit der zweiten und der dritten Flugzeuginterieurkomponente verklebt oder anderweitig mit der zweiten und der dritten Flugzeuginterieurkomponente verbunden werden. Vorzugsweise erfolgt die Verbindung des Scharnierfilms mit der zweiten und der dritten Flugzeuginterieurkomponente im Bereich einer Rückseite der zweiten und der dritten Flugzeuginterieurkomponente, d.h. im Bereich einer Seite der zweiten und der dritten Flugzeuginterieurkomponente, die im in einem Flugzeug verbauten Zustand der zweiten und der dritten Flugzeuginterieurkomponente unsichtbar ist.

Zusätzlich oder alternativ dazu kann das Scharnier mindestens ein Scharnierelement umfassen. Das Scharnierelement kann einen mit der zweiten Flugzeuginterieurkomponente verbindbaren ersten Befestigungsabschnitt sowie einen mit der dritten Flugzeuginterieurkomponente verbindbaren zweiten Befestigungsabschnitt aufweisen. Ferner kann ein mit der zweiten Verbindungsvorrichtung des Halteelements verbindbarer Verbindungsabschnitt und/oder ein mit dem Scharnierfilm des Scharniers verbindbarer Halteabschnitt vorgesehen sein. Vorzugsweise umfasst das Scharnier zwei Scharnierelemente, die an zwei entgegengesetzten Enden der Scharnierlängsachse positionierbar sein können. Die Scharnierelemente sind dann besonders gut geeignet, das Scharnier mit zwei sich im Wesentlichen parallel zueinander erstreckenden Halteelementen des Haltesystems des erfindungsgemäßen Interieurkomponententrägersystems zu verbinden.

Ferner kann das Scharnier mindestens ein mit dem Scharnierfilm verbundenes Versteifungselement umfassen, das sich entlang zumindest eines Abschnitts der Längsachse des Scharniers erstreckt und mit der zweiten oder der dritten Flugzeuginterieurkomponente verbindbar ist. Vorzugsweise umfasst das Scharnier mindestens zwei Versteifungselemente, die zu beiden Seiten des Scharnierfilms entlang der Längsachse des Scharniers an der zweiten bzw. der dritten Flugzeuginterieurkomponente befestigbar sind. Vorzugsweise bestehen die Versteifungselemente aus einem glasfaser- oder einem kohlefaserverstärkten Kunststoffmaterial. Alternativ dazu ist es jedoch auch denkbar, die Versteifungselemente aus Metall, beispielsweise aus Aluminium zu fertigen. Dies führt jedoch zu einem erhöhten Gewicht des Scharniers. Es versteht sich, dass das Scharnier auch eine Mehrzahl von Versteifungselementen umfassen kann, die entlang der Längsachse des Scharniers verteilt angeordnet sein können.

Ein erfindungsgemäßes Flugzeuginterieurkomponentenmodul umfasst ein oben beschriebenes Interieurkomponententrägersystem. Ferner umfasst das Modul eine erste Flugzeuginterieurkomponente, die mittels der ersten Verbindungsvorrichtung mit mindestens einem Halteelement des Haltesystems des Interieurkomponententrägersystems verbunden ist. Eine zweite Flugzeuginterieurkomponente ist über das Scharnier des Interieurkomponententrägersystems derart mit einer dritten Flugzeuginterieurkomponente verbunden, dass die dritte Flugzeuginterieurkomponente um die Längsachse des Scharniers relativ zu der zweiten Flugzeuginterieurkomponente verschwenkbar ist. Die an dem Halteelement des Haltesystems des Interieurkomponententrägersystems vorgesehene zweite Verbindungsvorrichtung ist mit dem Scharnier und/oder einem zu dem Scharnier benachbarten Bereich der zweiten und/oder der dritten Flugzeuginterieurkomponente verbunden, um die zweite und die dritte Flugzeuginterieurkomponente an dem Halteelement zu befestigen. Das Flugzeuginterieurkomponentenmodul ist mittels des an dem Halteelement des Haltesystems des Interieurkomponententrägersystems vorgesehenen Strukturhalters an einer Flugzeugstruktur befestigbar. Das erfindungsgemäße Flugzeuginterieurkomponentenmodul ist mittels des Interieurkomponententrägersystems, falls gewünscht, außerhalb des Flugzeugs zu einer eigenständig handhabbaren Baugruppe vormontierbar. Anschließend kann das Modul in seiner Endmontageposition transportiert und mittels des Strukturhalters des Interieurkomponententrägersystems an der Flugzeugstruktur befestigt werden. Das erfindungsgemäße Flugzeuginterieurkomponentenmodul ermöglicht es somit, die Endmontage von Interieurkomponenten in einem Flugzeug beträchtlich zu vereinfachen.

Das Flugzeuginterieurkomponentenmodul kann eine vierte Flugzeuginterieurkomponente umfassen, die mittels der dritten Verbindungsvorrichtung mit dem Halteelement des Haltesystems des Interieurkomponententrägersystems verbunden ist. Ferner kann das Modul eine fünfte Flugzeuginterieurkomponente umfassen, die mittels der vierten Verbindungsvorrichtung mit dem Halteelement des Haltesystems des Interieurkomponententrägersystems verbunden ist.

Ein erstes Halteelement des Haltesystems kann mittels der ersten Verbindungsvorrichtung des ersten Halteelements an einer ersten Seitenwand der ersten Flugzeuginterieurkomponente befestigt sein. Ein zweites Halteelement des Haltesystems kann mittels der ersten Verbindungsvorrichtung des zweiten Halteelements an einer der ersten Seitenwand gegenüberliegenden zweiten Seitenwand der ersten Flugzeuginterieurkomponente befestigt sein. Vorzugsweise erstrecken sich das erste und das zweite Halteelement des Haltesystems im mit der ersten Flugzeuginterieurkomponente verbundenen Zustand im Wesentlichen parallel zueinander. Beispielsweise sind die Halteelemente des Haltesystems an Außenflächen der einander gegenüberliegenden Seitenwände der ersten Flugzeuginterieurkomponente befestigt.

Die zweite, die dritte, die vierte und/oder die fünfte Flugzeuginterieurkomponente kann/können mittels einer Verbindungsvorrichtung des ersten Halteelements mit dem ersten Halteelement verbunden sein, die an einer ersten Seitenfläche des ersten Halteelements angebracht ist. Die zweite, die dritte, die vierte und/oder die fünfte Flugzeuginterieurkomponente kann/können ferner mittels einer Verbindungsvorrichtung des zweiten Halteelements mit dem zweiten Halteelement verbunden sein, die an einer ersten Seitenfläche des zweiten Halteelements angebracht ist, wobei die ersten Seitenfläche des ersten Halteelements der ersten Seitenfläche des zweiten Halteelements zugewandt ist. Mit anderen Worten, die an dem ersten und dem zweiten Halteelement vorgesehenen und zur Verbindung mit einer Flugzeuginterieurkomponente vorgesehenen Verbindungsvorrichtungen sind vorzugsweise an einander gegenüberliegenden ersten Seitenflächen des ersten und des zweiten Halteelements angebracht.

Bei dem erfindungsgemäßen Flugzeuginterieurkomponentenmodul kann die erste Flugzeuginterieurkomponente ein Überkopfgepäckfach sein. Die zweite Flugzeuginterieurkomponente kann ein Cove-Light-Paneel sein. Bei der dritten Flugzeuginterieurkomponente kann es sich um ein Fensterpaneel handeln. Vorzugsweise ist das Fensterpaneel einstückig mit einem Dadopaneel ausgebildet, wobei in das Dadopaneel eine Dekompressionseinrichtung integriert sein kann. Die vierte Flugzeuginterieurkomponente kann beispielsweise ein Beleuchtungselement sein. Bei der fünften Flugzeuginterieurkomponente kann es sich beispielsweise um ein Luftauslasselement einer Flugzeugklimaanlage handeln.

Bei dem erfindungsgemäßen Flugzeuginterieurkomponentenmodul kann sich der Scharnierfilm des in Form eines Filmscharniers ausgebildeten Scharniers des Interieurkomponententrägersystems entlang eines Montagespalts zwischen der ersten und der dritten Flugzeuginterieurkomponente erstrecken. Vorzugsweise deckt der Scharnierfilm den Montagespalt im Wesentlichen vollständig ab. Mindestens ein Scharnierelement des Scharniers kann mittels des ersten Befestigungsabschnitts des Scharnierelements mit der zweiten Flugzeuginterieurkomponente und mittels des zweiten Befestigungsabschnitts des Scharnierelements mit der dritten Flugzeuginterieurkomponente verbunden sein. Ferner kann mindestens ein mit dem Scharnierfilm verbundenes Versteifungselement des Scharniers entlang zumindest eines Abschnitts der Längsachse des Scharniers mit der zweiten oder der dritten Flugzeuginterieurkomponente verbunden sein. Falls gewünscht oder erforderlich, kann ein erstes Versteifungselement mit der zweiten und ein zweites Versteifungselement mit der dritten Flugzeuginterieurkomponente verbunden sein.

An der dritten Flugzeuginterieurkomponente kann ein weiterer Strukturhalter zur Verbindung der dritten Flugzeuginterieurkomponente mit der Flugzeugstruktur vorgesehen sein. Wenn die dritte Flugzeuginterieurkomponente in Form eines einstückig mit einem Dadopaneel ausgebildeten Fensterpaneels ausgeführt ist, ist der weitere Strukturhalter vorzugsweise im Bereich des Dadopaneels an der dritten Flugzeuginterieurkomponente befestigt. Beispielsweise kann der weitere Strukturhalter im Bereich einer Rückseite des Dadopaneels, die im in einem Flugzeug montierten Zustand des Flugzeuginterieurkomponentenmoduls nicht sichtbar ist, an der dritten Flugzeuginterieurkomponente befestigt sein. Das erfindungsgemäße Flugzeuginterieurkomponentenmodul kann folglich mit Hilfe des Strukturhalters des Interieurkomponententrägersystems an der Flugzeugstruktur gesichert werden. Anschließend kann mittels des weiteren Strukturhalters die dritte Flugzeuginterieurkomponente in ihrer Position insbesondere relativ zu der zweiten Flugzeuginterieurkomponente gesichert werden. Das erfindungsgemäße Flugzeuginterieurkomponentenmodul kann somit mit Hilfe einer sehr geringen Anzahl von an der Flugzeugstruktur vorzusehenden Montagepunkten an der Flugzeugstruktur befestigt werden.

Bei einem erfindungsgemäßen Verfahren zur Montage eines Flugzeuginterieurkomponentenmoduls in einem Flugzeug wird zunächst ein oben beschriebenes Flugzeuginterieurkomponentenmodul außerhalb des Flugzeugs vormontiert. Anschließend wird das Flugzeuginterieurkomponentenmodul in eine Endmontageposition in einem Flugzeugrumpfelement transportiert. Hierzu kann beispielsweise eine in der DE 10 2009 023 393 beschriebene Transportvorrichtung zum Einsatz kommen. Bei dem Flugzeugrumpfelement kann es sich um eine beispielsweise an mindestens einer Stirnseite offene Rumpfschale handeln. Alternativ dazu kann das Flugzeuginterieurkomponentenmodul jedoch auch in einen nahezu vollständig oder vollständig aufgebauten Flugzeugrumpf eingebracht werden. Wesentlich ist lediglich, dass das Flugzeugrumpfelement einen Zugang aufweist, der das Einbringen des Moduls in seine Endmontageposition in dem Flugzeugrumpfelement ermöglicht. Schließlich wird das Flugzeuginterieurkomponentenmodul mittels des Strukturhalters des Interieurkomponententrägersystems an einer Flugzeugstruktur befestigt.

Während der Vormontage, während einer Zwischenlagerung und/oder während eines Transports kann die dritte Flugzeuginterieurkomponente des Moduls mittels des Scharniers relativ zu der zweiten Flugzeuginterieurkomponente in eine von der Endmontageposition der beiden Interieurkomponenten abweichenden Position verschwenkt sein. Insbesondere können die zweite und die dritte Flugzeuginterieurkomponente während der Vormontage, einer Zwischenlagerung und/oder eines Transports des Moduls derart relativ zueinander verschwenkt sein, dass das Gesamtvolumen des Moduls verringert wird. Dadurch wird es z.B. ermöglicht, das vormontierte Modul platzsparend zwischenzulagern und/oder durch eine vergleichsweise kleine Zugangsöffnung in dem Flugzeugrumpfelement in seine Endmontageposition in dem Flugzeugrumpfelement zu transportieren. Das erfindungsgemäße Montageverfahren umfasst dann vorzugsweise das Verschwenken der dritten Flugzeuginterieurkomponente relativ zu der zweiten Flugzeuginterieurkomponente mittels des Scharniers in seine Endmontageposition, in der die dritte Flugzeuginterieurkomponente, beispielsweise mittels des weiteren Strukturhalters, in einer gewünschten Position an der Flugzeugstruktur befestigt werden kann.

Ein bevorzugtes Ausführungsbeispiel der Erfindung wird nun anhand der beigefügten schematischen Zeichnungen näher erläutert, von denen
- Figur 1: eine dreidimensionale Ansicht eines Flugzeuginterieurkomponentenmoduls zeigt,
- Figur 2: eine Seitenansicht des Flugzeuginterieurkomponentenmoduls gemäß Figur 1 zeigt,
- Figur 3: eine dreidimensionale Detailansicht eines Interieurkomponententrägersystems des Flugzeuginterieurkomponentenmoduls gemäß Figur 1 zeigt,
- Figur 4: eine weitere dreidimensionale Ansicht des Interieurkomponententrägersystems gemäß Figur 3 zeigt,
- Figur 5: eine dreidimensionale Ansicht des Flugzeuginterieurkomponentenmoduls gemäß Figur 1 zeigt, wobei eine dritte Flugzeuginterieurkomponente relativ zu einer zweiten Flugzeuginterieurkomponente des Moduls verschwenkt ist,
- Figur 6: ein Halteelement eines Haltesystem des Interieurkomponententrägersystems gemäß den Figuren 3 und 4 zeigt,
- Figur 7: ein Scharnier des Montagesystems gemäß den Figuren 3 und 4 zeigt,
- Figur 8: ein erstes Ausführungsbeispiel eines zum Einsatz in einem Scharnier gemäß Figur 7 geeigneten Scharnierelements zeigt, und
- Figur 9: ein zweites Ausführungsbeispiel eines zum Einsatz in einem Scharnier gemäß Figur 7 geeigneten Scharnierelements zeigt.

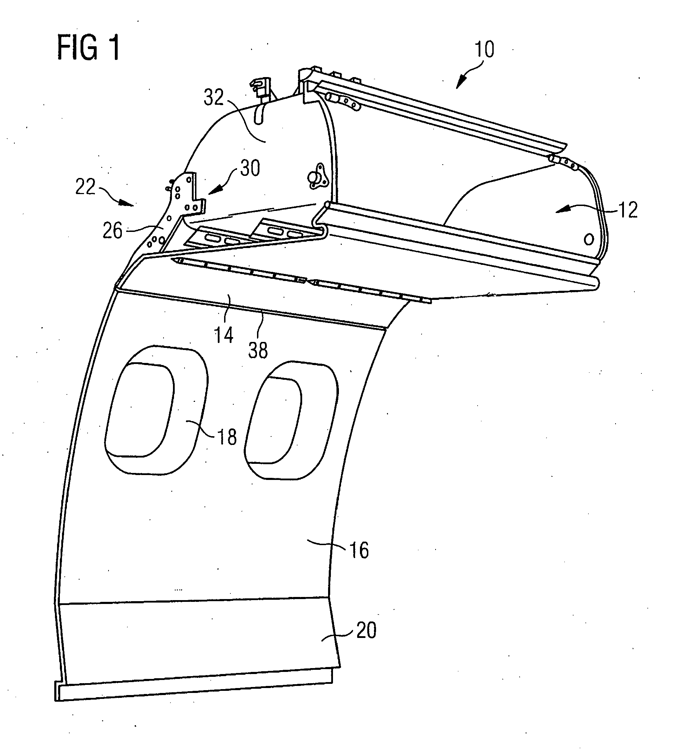

Ein in den Figuren 1, 2 und 5 veranschaulichtes Flugzeuginterieurkomponentenmodul 10 umfasst eine in Form eines Überkopfgepäckfachs ausgebildete erste Flugzeuginterieurkomponente 12 sowie eine in Form eines Cove-Light-Paneels ausgebildete zweite Flugzeuginterieurkomponente 14. Als dritte Flugzeuginterieurkomponente 16 umfasst das Modul 10 ein Fensterpaneel 18, das einstückig mit einem Dadopaneel 20 ausgebildet ist. In das Dadopaneel 20 ist eine in den Figuren nicht näher veranschaulichte Dekompressionsvorrichtung integriert.

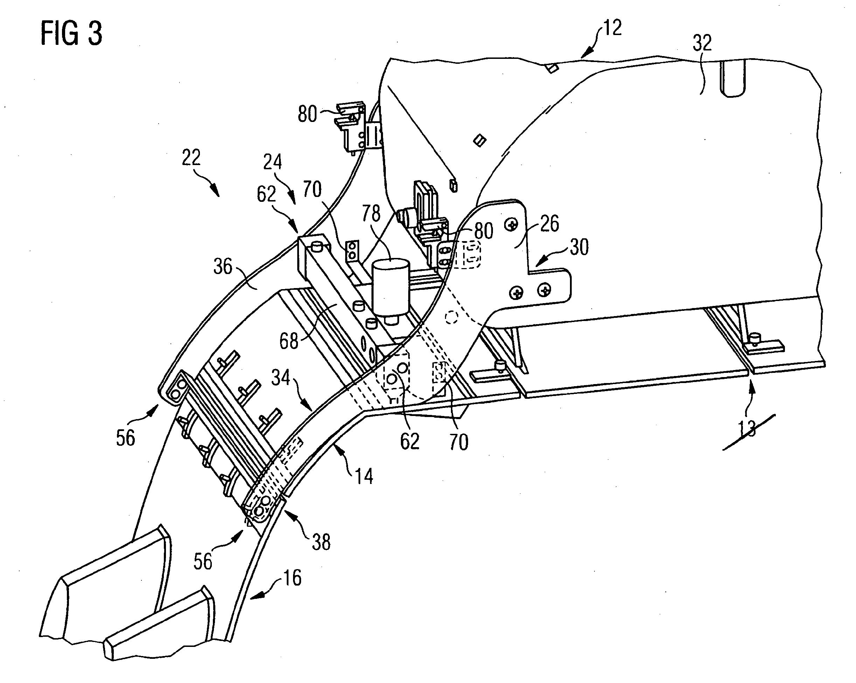

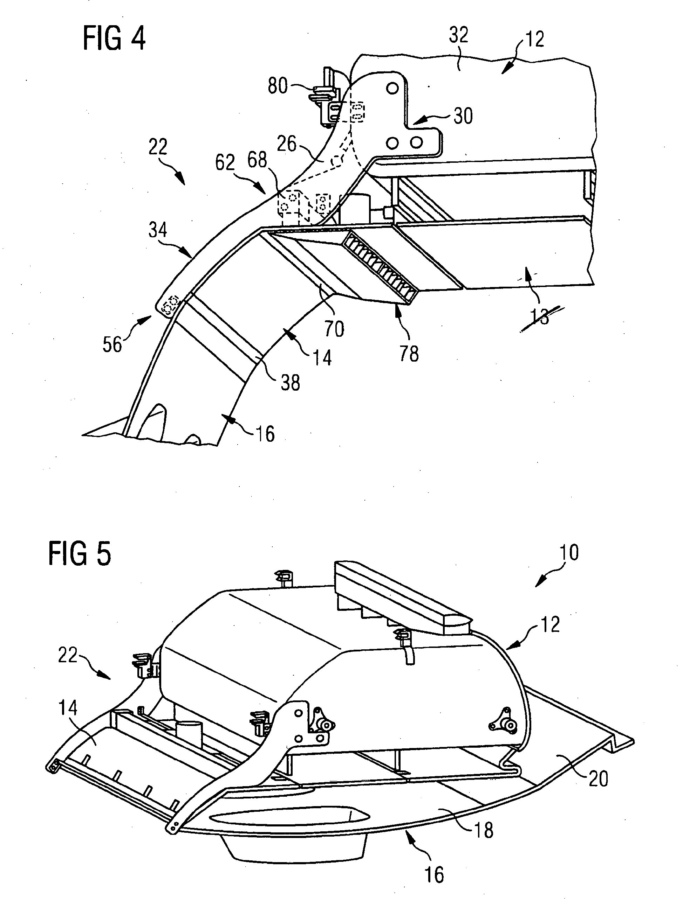

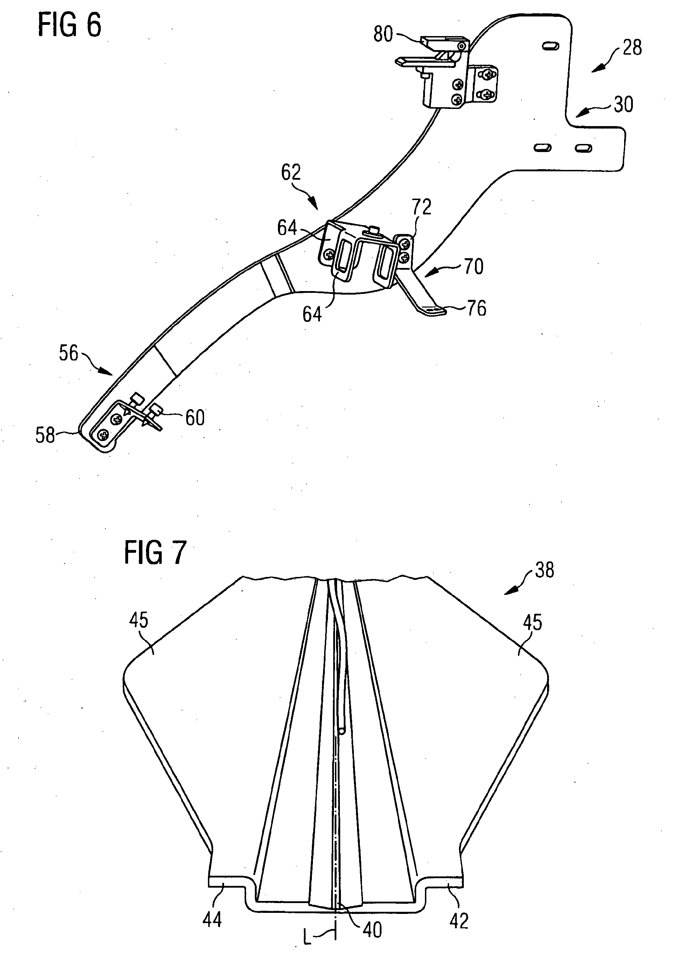

Ein insbesondere in den Figuren 3 und 4 veranschaulichtes Interieurkomponententrägersystem 22 des Flugzeuginterieurkomponentenmoduls 10 umfasst ein Haltesystem 24, das zwei, in Figur 6 detailliert veranschaulichte Halteelemente 26, 28 aufweist. Im Bereich eines ersten Endes ist das erste Halteelement 26 des Haltesystems 24 mit einer ersten Verbindungsvorrichtung 30 versehen. Die erste Verbindungsvorrichtung 30 umfasst drei das erste Halteelement 26 durchsetzende Bohrungen, durch die Schrauben, Nieten oder andere geeignete Befestigungsmittel hindurchgeführt werden können, um das erste Halteelement 26 an einer Außenfläche einer Seitenwand 32 der in Form eines Überkopfgepäckfachs ausgebildeten ersten Flugzeuginterieurkomponente 12 zu befestigen.

In ähnlicher Weise ist das zweite Halteelement 28 im Bereich eines ersten Endes mit einer ersten Verbindungsvorrichtung versehen, die drei das zweite Halteelement 28 durchsetzende Bohrungen sowie in den Bohrungen aufgenommene Schrauben, Nieten oder andere geeignete Befestigungsmittel umfasst und dazu dient, das zweite Halteelement 28 an einer Außenfläche einer der Seitenwand 32 der in Form eines Überkopfgepäckfachs ausgebildeten ersten Flugzeuginterieurkomponente 12 gegenüberliegenden Seitenwand der ersten Flugzeuginterieurkomponente 12 zu befestigen. Im mit der ersten Flugzeuginterieurkomponente 12 verbundenen Zustand erstrecken sich die Halteelemente 26, 28 des Haltesystems 24 somit im Wesentlichen parallel zueinander. Ein Abschnitt einer ersten Seitenfläche 34 des ersten Halteelements 26 liegt an der Seitenwand 32 der in Form eines Überkopfgepäckfachs ausgebildeten ersten Flugzeuginterieurkomponente 12 an. In ähnlicher Weise liegt ein Abschnitt einer der ersten Seitenfläche 34 des ersten Halteelements 26 zugewandten ersten Seitenfläche 36 des zweiten Halteelements 28 an der der Seitenwand 32 gegenüberliegenden Seitenwand der in Form eines Überkopfgepäckfachs ausgebildeten ersten Flugzeuginterieurkomponente 12 an.

Die in Form eines Cove-Light-Paneels ausgebildete zweite Flugzeuginterieurkomponente 14 ist über ein in Fig. 7 veranschaulichtes Scharnier 38 mit der ein Fensterpaneel 18 sowie ein Dadopaneel 20 umfassenden dritten Flugzeuginterieurkomponente 16 verbunden. Das Scharnier 38 ist in Form eines Filmscharniers ausgebildet und umfasst einen sich entlang einer Längsachse L des Scharniers 38 erstreckenden Scharnierfilm 40. Der aus einem Polyurethan-Kunststoffmaterial bestehende Scharnierfilm 40 umfasst sich entlang der Längsachse L des Scharniers 38 erstreckende Befestigungslaschen 42, 44. Über eine erste Befestigungslasche 42 ist der Scharnierfilm 40 mit einer Rückseite der in Form eines Cove-Light-Paneels ausgebildeten zweiten Flugzeuginterieurkomponente 14 verbunden, wobei die Rückseite der zweiten Flugzeuginterieurkomponente 14 im in einem Flugzeug montierten Zustand des Flugzeuginterieurkomponentenmoduls 10 nicht sichtbar ist. In ähnlicher Weise ist eine zweite Befestigungslasche 44 des Scharnierfilms 40 mit einer Rückseite der dritten Flugzeuginterieurkomponente 16 verbunden, die im in einem Flugzeug montierten Zustand des Flugzeuginterieurkomponentenmoduls 10 ebenfalls nicht sichtbar ist. Die Befestigungslaschen 42, 44 können mit den Flugzeuginterieurkomponenten 14, 16 verklebt oder anderweitig mit den Flugzeuginterieurkomponenten 14, 16 verbunden sein. An den Befestigungslaschen 42, 44 ist jeweils ein Versteifungselement 45 befestigt. Die Versteifungselemente 45 bestehen aus einem faserverstärkten Kunststoffmaterial und dienen dazu, dem Scharnier 38 die erforderliche Steifigkeit zu verleihen.

Der Scharnierfilm 40 des Scharniers 38 erstreckt sich über die gesamte Längsachse L des Scharniers 38 bzw. über die gesamte Länge eines zwischen der zweiten und der dritten Flugzeuginterieurkomponente 14, 16 vorhandenen Montagespalts. Der Scharnierfilm ist somit nicht nur dazu geeignet, eine Relativbewegung zwischen der zweiten und der dritten Flugzeuginterieurkomponente 14, 16 zu ermöglichen, sondern deckt auch den zwischen der zweiten und der dritten Flugzeuginterieurkomponente 14, 16 vorhandenen Montagespalt ab, d.h. er verhindert das Eindringen von Schmutz oder Feuchtigkeit in den Montagespalt.

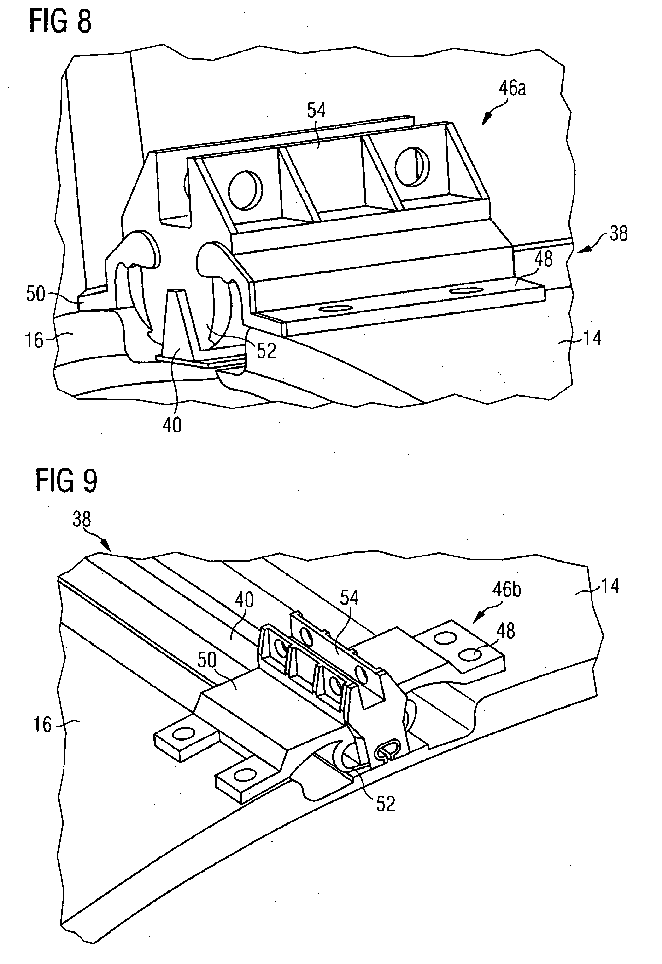

Das Scharnier 38 umfasst ferner zwei Scharnierelemente 46a, 46b, die an einander gegenüberliegenden Enden des Scharnierfilms 40 mit dem Scharnierfilm 40 verbunden sind. In den Fig. 8 und 9 sind zwei verschiedene Ausführungsbeispiele der Scharnierelemente 46a, 46b gezeigt. Die Scharnierelemente 46a, 46b umfassen einen mit der zweiten Flugzeuginterieurkomponente 14 verbundenen ersten Befestigungsabschnitt 48 sowie einen mit der dritten Flugzeuginterieurkomponente 16 verbundenen zweiten Befestigungsabschnitt 50. Ein Halteelement 52 der Scharnierelemente 46a, 46b ist mit dem Scharnierfilm 40 verbunden. Die in den Fig. 8 und 9 gezeigten Ausführungsbeispiele der Scharnierelemente 46a, 46b unterscheiden sich im Wesentlichen durch die Ausgestaltung der Form des Halteabschnitts 52 zur Aufnahme des Scharnierfilms 40. Schließlich sind die Scharnierelemente 46a, 46b mit einem Verbindungsabschnitt 54 versehen. Der Verbindungsabschnitt 54 der Scharnierelemente 46a, 46b ist dazu vorgesehen, mit einer im Folgenden näher erläuterten zweiten Verbindungsvorrichtung 56 der Halteelemente 26, 28 verbunden zu werden.

Das Scharnier 38 sorgt für eine schwenkbare Verbindung der dritten Flugzeuginterieurkomponente 16 mit der zweiten Flugzeuginterieurkomponente 14. Folglich kann die dritte Flugzeuginterieurkomponente 16, wie in Fig. 5 gezeigt ist, derart relativ zu der zweiten Flugzeuginterieurkomponente 14 verschwenkt werden, dass sich das Gesamtvolumen des Flugzeuginterieurkomponentenmoduls 10 deutlich verringert. Das Modul 10 kann in der in Fig. 5 veranschaulichten Konfiguration vergleichsweise platzsparend zwischengelagert oder transportiert werden. Darüber hinaus dient das Scharnier 38 über die Scharnierelemente 46a, 46b, wie im Folgenden erörtert, der Anbindung an die Halteelemente 26, 28 des Interieurkomponententrägersystems 22.

Die zur Verbindung mit den Scharnierelementen 46a, 46b des Scharniers 38 vorgesehene zweite Verbindungsvorrichtung 56 ist im Wesentlichen L-förmig gestaltet und umfasst einen an den jeweiligen ersten Seitenflächen 34, 36 der Halteelemente 26, 28 befestigten ersten Schenkel 58. Von dem ersten Schenkel 58 erstreckt sich in einem Winkel von ca. 90 Grad ein zweiter Schenkel 60. Der zweite Schenkel 60 ist dazu vorgesehen, in dem Verbindungsabschnitt 54 der Scharnierelemente 46a, 46b aufgenommen zu werden und durch geeignete Befestigungsmittel, beispielsweise Schrauben oder Nieten, mit dem Verbindungsabschnitt 54 der Scharnierelemente 46a, 46b verbunden zu werden. Das Scharnier 38 erfüllt somit nicht nur die Funktion, die dritte Flugzeuginterieurkomponente 16 schwenkbar mit der zweiten Flugzeuginterieurkomponente 14 zu verbinden, sondern ermöglicht auch die Anbindung der zweiten und der dritten Flugzeuginterieurkomponente 14, 16 an die Halteelemente 26, 28 des Interieurkomponententrägersystems 22 und damit an die erste Flugzeuginterieurkomponente 12.

Die zweite Verbindungsvorrichtung 56 des ersten Halteelements 26 erstreckt sich von der ersten Seitenfläche 34 des ersten Halteelements 26 in Richtung der ersten Seitenfläche 36 des zweiten Halteelements 28. In ähnlicher Weise erstreckt sich die zweite Verbindungsvorrichtung 56 des zweiten Halteelements 28 von der ersten Seitenfläche 36 des zweiten Halteelements 28 in Richtung der ersten Seitenfläche 34 des ersten Halteelements 26. Diese Konfiguration ermöglicht eine sichere Verbindung der Verbindungsvorrichtungen 56 der Halteelemente 26, 28 mit den im Bereich der Enden des Scharnierfilms 40 angeordneten Scharnierelementen 46a, 46b des Scharniers 38.

Wie am besten in den Fig. 3 und 6 zu erkennen ist, ist an der ersten Seitenfläche 34 des ersten Halteelements 26 ferner eine dritte Verbindungsvorrichtung 62 angebracht. In ähnlicher Weise erstreckt sich auch von der ersten Seitenfläche 36 des zweiten Halteelements 28 eine dritte Verbindungsvorrichtung 62. Die dritte Verbindungsvorrichtung 62 umfasst eine an den jeweiligen Seitenflächen 34, 36 der Halteelemente 26, 28 montierte Befestigungsplatte 64. Von der Befestigungsplatte 64 erstreckt sich ein im Wesentlichen U-förmiger Montageabschnitt 66. Der Montageabschnitt 66 umgreift eine Außenfläche einer in Form eines Beleuchtungselements ausgebildeten vierten Flugzeuginterieurkomponente 68.

Schließlich erstreckt sich von den ersten Seitenflächen 34, 36 der Halteelemente 26, 28 jeweils eine vierte Verbindungsvorrichtung 70. Die vierte Verbindungsvorrichtung 70 umfasst eine an den jeweiligen Seitenflächen 34, 36 der Halteelemente 26, 28 befestigte Befestigungsplatte 72, von der sich ein Steg 74 erstreckt. An dem Steg 74 ist ein Montageabschnitt 76 angebracht. Der Montageabschnitt 76 ist mit Bohrungen versehen, die von geeigneten Befestigungsmitteln, wie z.B. Schrauben oder Nieten durchsetzt sind, um den Montageabschnitt 76 mit einer in Form eines Luftauslasselements einer Flugzeugklimaanlage ausgebildeten fünften Flugzeuginterieurkomponente 78 zu verbinden.

Schließlich ist an der ersten Seitenfläche 34, 36 eines jeden Halteelements 26, 28 des Haltesystems 24 ein Strukturhalter 80 angebracht. Der Strukturhalter 80 dient dazu, das Flugzeuginterieurkomponentenmodul 10 bei der Montage in einem Flugzeugrumpfelement mit einer Flugzeugstruktur zu verbinden. Ferner kann das Flugzeuginterieurkomponentenmodul 10 mittels des Strukturhalters 80 beim Transport in seine Endmontageposition an einer geeigneten Transportvorrichtung befestigt werden. Dadurch kann der Kontakt von Flächen des Moduls 10, die im in einem Flugzeug montierten Zustand des Moduls 10 sichtbar sind, mit der Transportvorrichtung vermieden und das Risiko einer Verschmutzung oder Beschädigung dieser sichtbaren Flächen minimiert werden. Das Haltesystem 24 des Interieurkomponententrägersystems 22 dient somit nicht nur dazu, die Flugzeuginterieurkomponenten 12, 14, 16, 68, 78 miteinander zu verbinden, sondern ermöglicht auch die Anbindung dieser Komponenten 12, 14, 16, 68, 78 an die Flugzeugstruktur.

Im Bereich des einen Teil der dritten Flugzeuginterieurkomponente 16 bildenden Dadopaneels 20 ist ein weiterer Strukturhalter 82 angebracht. Der weitere Strukturhalter 82 dient jedoch dazu, die dritte Flugzeuginterieurkomponente 16 im Bereich des Dadopaneels 20 an der Struktur zu fixieren.

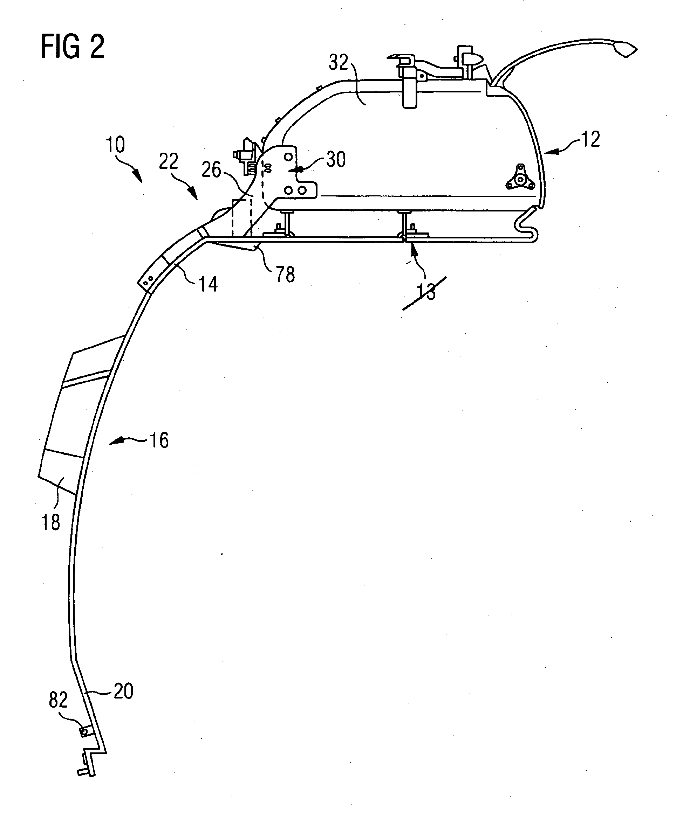

Das Flugzeuginterieurkomponentenmodul 10 kann außerhalb des Flugzeugs zu einer in den Fig. 1 und 2 veranschaulichten Großbaugruppe vormontiert werden. Anschlieβend kann das Modul 10 in eine Endmontageposition in einem Flugzeugrumpfelement transportiert und dort mittels der Strukturhalter 80, 82 an der Flugzeugstruktur befestigt werden.

## Patentansprüche

1. Interieurkomponententrägersystem (22) zur Verwendung bei der Montage von Flugzeuginterieurkomponenten (12, 14, 16, 68, 78) in einem Flugzeug, mit:
- einem Haltesystem (24), das mindestens ein Halteelement (26, 28) umfasst, wobei an dem Halteelement (26, 28) eine erste Verbindungsvorrichtung (30) zur Verbindung des Halteelements (26, 28) mit einer ersten Flugzeuginterieurkomponente (14) vorgesehen ist, und wobei an dem Halteelement (26, 28) ferner ein Strukturhalter (80) zur Befestigung des Halteelements (26, 28) an einer Flugzeugstruktur vorgesehen ist, **gekennzeichnet durch** eine zweite Verbindungsvorrichtung (56) und ein Scharnier (38), das derart mit einer zweiten sowie einer dritten Flugzeuginterieurkomponente (14, 16) verbindbar ist, dass die dritte Flugzeuginterieurkomponente (16) um eine Längsachse (L) des Scharniers (38) relativ zu der zweiten Flugzeuginterieurkomponente (14) verschwenkbar ist, wobei die an dem Halteelement (26, 28) angebrachte zweite Verbindungsvorrichtung (56) dazu eingerichtet ist, mit dem Scharnier (38) und/oder einem zu dem Scharnier (38) benachbarten Bereich der zweiten und/oder der dritten Flugzeuginterieurkomponente (14, 16) verbunden zu werden.

2. Interieurkomponententrägersystem nach Anspruch 1,
**dadurch gekennzeichnet, dass** an dem Halteelement (26, 28) ferner eine dritte Verbindungsvorrichtung (62) zur Verbindung des Halteelements (26, 28) mit einer vierten Flugzeuginterieurkomponente (68) und/oder eine vierte Verbindungsvorrichtung (70) zur Verbindung des Halteelements (26, 28) mit einer fünften Flugzeuginterieurkomponente (78) vorgesehen ist.

3. Interieurkomponententrägersystem nach Anspruch 1 oder 2,
**dadurch gekennzeichnet, dass** das Haltesystem (24) mindestens zwei Halteelemente (26, 28) umfasst, die sich im mit der ersten Flugzeuginterieurkomponente (12), dem Scharnier (38), der zweiten und/oder der dritten Flugzeuginterieurkomponente (14, 16) verbundenen Zustand des Haltesystems (24) im Wesentlichen parallel zueinander erstrecken, wobei mindestens eine an dem ersten Halteelement (26) vorgesehene Verbindungsvorrichtung (56, 62, 70) an einer ersten Seitenfläche (34) des ersten Halteelements (26) angebracht ist, die im mit der ersten Flugzeuginterieurkomponente (12), dem Scharnier (38), der zweiten und/oder der dritten Flugzeuginterieurkomponente (14, 16) verbundenen Zustand des Haltesystems (24) einer ersten Seitenfläche (36) des zweiten Halteelements (28) zugewandt ist, an der eine entsprechende, an dem zweiten Halteelement (28) vorgesehene Verbindungsvorrichtung (56, 62, 70) angebracht ist.

4. Interieurkomponententrägersystem nach einem der Ansprüche 1 bis 3 ,
**dadurch gekennzeichnet, dass** die erste Verbindungsvorrichtung (30) eine Verbindungsvorrichtung zur Verbindung des Halteelements (26, 28) mit einem Überkopfgepäckfach ist, dass die zweite Verbindungsvorrichtung (56) eine Verbindungsvorrichtung zur Verbindung des Halteelements (26, 28) mit einem ein Cove-Light-Paneel mit einem Fensterpaneel verbindenden Scharnier (38), einem zu dem Scharnier (38) benachbarten Bereich des Cove-Light-Paneels und/oder einem zu dem Scharnier (38) benachbarten Bereich des Fensterpaneels ist, dass die dritte Verbindungsvorrichtung (62) eine Verbindungsvorrichtung zur Verbindung des Halteelements (26, 28) mit einem Beleuchtungselement ist und/oder die vierte Verbindungsvorrichtung (70) eine Verbindungsvorrichtung zur Verbindung des Halteelements (26, 28) mit einem Luftauslasselement einer Flugzeugklimaanlage ist.

5. Interieurkomponententrägersystem nach einem der Ansprüche 1 bis 4,
**dadurch gekennzeichnet, dass** das Scharnier (38) in Form eines Filmscharniers ausgebildet ist, das einen sich entlang der Längsachse (L) des Scharniers (38) erstreckenden Scharnierfilm (40) umfasst.

6. Interieurkomponententrägersystem nach einem der Ansprüche 1 bis 5,
**dadurch gekennzeichnet, dass** das Scharnier (38) mindestens ein Scharnierelement (46a, 46b) umfasst, das einen mit der zweiten Flugzeuginterieurkomponente (14) verbindbaren ersten Befestigungsabschnitt (48), einen mit der dritten Flugzeuginterieurkomponente (16) verbindbaren zweiten Befestigungsabschnitt (50), einen mit der zweiten Verbindungsvorrichtung (56) des Halteelements (26, 28) verbindbaren Verbindungsabschnitt (54) und/oder einen mit dem Scharnierfilm (40) des Scharniers (38) verbindbaren Halteabschnitt (52) umfasst.

7. Interieurkomponententrägersystem nach Anspruch 5 oder 6,
**dadurch gekennzeichnet, dass** das Scharnier (38) mindestens ein mit dem Scharnierfilm (40) verbundenes Versteifungselement (45) umfasst, das sich entlang zumindest eines Abschnitts der Längsachse (L) des Scharniers (38) erstreckt und mit der zweiten oder der dritten Flugzeuginterieurkomponente (14, 16) verbindbar ist.

8. Flugzeuginterieurkomponentenmodul (10) mit:
- einem Interieurkomponententrägersystem (22) nach einem der Ansprüche 1 bis 7,
- einer ersten Flugzeuginterieurkomponente (12), die mittels der ersten Verbindungsvorrichtung (30) mit mindestens einem Halteelement (26, 28) des Haltesystems (24) des Interieurkomponententrägersystems (22) verbunden ist,
- einer zweiten Flugzeuginterieurkomponente (14) die über das Scharnier (38) des Interieurkomponententrägersystems (22) derart mit einer dritten Flugzeuginterieurkomponente (16) verbunden ist, dass die dritte Flugzeuginterieurkomponente (16) um die Längsachse (L) des Scharniers (38) relativ zu der zweiten Flugzeuginterieurkomponente (14) verschwenkbar ist, wobei die an dem Halteelement (26, 28) des Haltesystems (24) des Interieurkomponententrägersystems (22) vorgesehene zweite Verbindungsvorrichtung (56) mit dem Scharnier (38) und/oder einem zu dem Scharnier (38) benachbarten Bereich der zweiten und/oder der dritten Flugzeuginterieurkomponente (14, 16) verbunden ist, um die zweite und die dritte Flugzeuginterieurkomponente (14, 16) an dem Halteelement (26, 28) zu befestigen, und wobei das Flugzeuginterieurkomponentenmodul (10) mittels des an dem Halteelement (26, 28) des Haltesystems (24) des Interieurkomponententrägersystems (22) vorgesehenen Strukturhalters (80) an einer Flugzeugstruktur befestigbar ist.

9. Flugzeuginterieurkomponentenmodul nach Anspruch 8,
**gekennzeichnet durch** eine vierte Flugzeuginterieurkomponente (68), die mittels der dritten Verbindungsvorrichtung (62) mit dem Halteelement (26, 28) des Haltesystems (24) des Interieurkomponententrägersystems (22) verbunden ist, und/oder eine fünfte Flugzeuginterieurkomponente (78), die mittels der vierten Verbindungsvorrichtung (70) mit dem Halteelement (26, 28) des Haltesystems (24) des Interieurkomponententrägersystems (22) verbunden ist.

10. Flugzeuginterieurkomponentenmodul nach Anspruch 8 oder 9,
**dadurch gekennzeichnet, dass** ein erstes Halteelement (26) des Haltesystems (24) mittels der ersten Verbindungsvorrichtung (30) des ersten Halteelements (26) an einer ersten Seitenwand (32) der ersten Flugzeuginterieurkomponente (12) befestigt ist und ein zweites Halteelement (28) des Haltesystems (24) mittels der ersten Verbindungsvorrichtung (30) des zweiten Halteelements (28) an einer der ersten Seitenwand (32) gegenüberliegenden zweiten Seitenwand der ersten Flugzeuginterieurkomponente (12) befestigt ist, wobei sich das erste und das zweite Halteelement (26, 28) des Haltesystems (24) im Wesentlichen parallel zueinander erstrecken.

11. Flugzeuginterieurkomponentenmodul nach Anspruch 10,
**dadurch gekennzeichnet, dass** die zweite, die dritte, die vierte und/und oder die fünfte Flugzeuginterieurkomponente (14, 16, 68, 78) mittels einer Verbindungsvorrichtung (56, 62, 70) des ersten Haltelements (26) mit dem ersten Haltelement (26) verbunden ist/sind, die an einer ersten Seitenfläche (34) des ersten Halteelements (26) angebracht ist, und dass die zweite, die dritte, die vierte und/und oder die fünfte Flugzeuginterieurkomponente (14, 16, 68, 78) mittels einer Verbindungsvorrichtung (56, 62, 70) des zweiten Haltelements (28) mit dem zweiten Haltelement (28) verbunden ist/sind, die an einer ersten Seitenfläche (36) des zweiten Halteelements (28) angebracht ist, wobei die erste Seitenfläche (34) des ersten Halteelements (26) der ersten Seitenfläche (36) des zweiten Halteelements (28) zugewandt ist.

12. Flugzeuginterieurkomponentenmodul nach einem der Ansprüche 8 bis 11,
**dadurch gekennzeichnet, dass** die erste Flugzeuginterieurkomponente (12) ein Überkopfgepäckfach, die zweite Flugzeuginterieurkomponente (14) ein Cove-Light-Paneel, die dritte Flugzeuginterieurkomponente (16) ein vorzugsweise einstückig mit einem Dadopaneel ausgebildetes Fensterpaneel, die vierte Flugzeuginterieurkomponente (68) ein Beleuchtungselement und/oder die fünfte Flugzeuginterieurkomponente (78) ein Luftauslasselement einer Flugzeugklimaanlage ist.

13. Flugzeuginterieurkomponentenmodul nach einem der Ansprüche 8 bis 12,
**dadurch gekennzeichnet, dass** sich der Scharnierfilm (40) des in Form eines Filmscharniers ausgebildeten Scharniers (38) des Interieurkomponententrägersystems (22) entlang eines Montagespalts zwischen der zweiten und der dritten Flugzeuginterieurkomponente (14, 16) erstreckt und den Montagespalt im Wesentlichen vollständig abdeckt, dass mindestens ein Scharnierelement (46a, 46b) des Scharniers (38) mittels des ersten Befestigungsabschnitts (48) des Scharnierelements (46a, 46b) mit der zweiten Flugzeuginterieurkomponente (14) und mittels des zweiten Befestigungsabschnitts (50) des Scharnierelements (46a, 46b) mit der dritten Flugzeuginterieurkomponente (16) verbunden ist und/oder dass mindestens ein mit dem Scharnierfilm (40) verbundenes Versteifungselement (45) des Scharniers (38) entlang zumindest eines Abschnitts der Längsachse (L) des Scharniers (38) mit der zweiten oder der dritten Flugzeuginterieurkomponente (14, 16) verbunden ist.

14. Flugzeuginterieurkomponentenmodul nach einem der Ansprüche 8 bis 13,
**dadurch gekennzeichnet, dass** an der dritten Flugzeuginterieurkomponente (16) ein weiterer Strukturhalter (82) zur Verbindung der dritten Flugzeuginterieurkomponente (16) mit der Flugzeugstruktur vorgesehen ist.

15. Verfahren zur Montage eines Flugzeuginterieurkomponentenmoduls (10) in einem Flugzeug, mit den Schritten:
- Vormontieren eines Flugzeuginterieurkomponentenmoduls (10) nach einem der Ansprüche 8 bis 14 außerhalb des Flugzeugs,
- Transportieren des Flugzeuginterieurkomponentenmoduls (10) in eine Endmontageposition in einem Flugzeugrumpfelement,
- Befestigen des Flugzeuginterieurkomponentenmoduls (10) an einer Flugzeugstruktur mittels des Strukturhalters (80) des Interieurkomponententrägersystems (22).

## Claims

1. Interior component carrier system (22) for use in the assembly of aircraft interior components (12, 14, 16, 68, 78) in an aircraft, comprising:
- a retaining system (24), which comprises at least one retaining element (26, 28), wherein a first connection device (30) for connecting the retaining element (26, 28) to a first aircraft interior component (14) is provided on the retaining element (26, 28), and wherein a structural retainer (80) for fastening the retaining element (26, 28) to an aircraft structure is further provided on the retaining element (26, 28), **characterized by** a second connection device (56) and a hinge (38), which is connectable in such a way to a second and a third aircraft interior component (14, 16) that the third aircraft interior component (16) is pivotable about a longitudinal axis (L) of the hinge (38) relative to the second aircraft interior component (14), wherein the second connection device (56) mounted on the retaining element (26, 28) is configured to be connected to the hinge (38) and/or to a region of the second and/or the third aircraft interior component (14, 16) that is adjacent to the hinge (38).

2. Interior component carrier system according to claim 1,
**characterized in that** a third connection device (62) for connecting the retaining element (26, 28) to a fourth aircraft interior component (68) and/or a fourth connection device (70) for connecting the retaining element (26, 28) to a fifth aircraft interior component (78) is further provided on the retaining element (26, 28).

3. Interior component carrier system according to claim 1 or 2,
**characterized in that** the retaining system (24) comprises at least two retaining elements (26, 28), which, when the retaining system (24) is connected to the first aircraft interior component (12), the hinge (38), the second and/or the third aircraft interior component (14, 16), extend substantially parallel to one another, wherein at least one connection device (56, 62, 70) provided on the first retaining element (26) is mounted on a first lateral surface (34) of the first retaining element (26) that, when the retaining system (24) is connected to the first aircraft interior component (12), the hinge (38), the second and/or the third aircraft interior component (14, 16), faces a first lateral surface (36) of the second retaining element (28), on which lateral face (36) a corresponding connection device (56, 62, 70) provided on the second retaining element (28) is mounted.

4. Interior component carrier system according to one of claims 1 to 3,
**characterized in that** the first connection device (30) is a connection device for connecting the retaining element (26, 28) to an overhead luggage compartment, that the second connection device (56) is a connection device for connecting the retaining element (26, 28) to a hinge (38) that connects a cove light panel to a window panel, to a region of the cove light panel that is adjacent to the hinge (38) and/or to a region of the window panel that is adjacent to the hinge (38), that the third connection device (62) is a connection device for connecting the retaining element (26, 28) to a lighting element and/or the fourth connection device (70) is a connection device for connecting the retaining element (26, 28) to an air outlet element of an aircraft air conditioning system.

5. Interior component carrier system according to one of claims 1 to 4,
**characterized in that** the hinge (38) is configured in the form of a film hinge, which comprises a hinge film (40) extending along the longitudinal axis (L) of the hinge (38).

6. Interior component carrier system according to one of claims 1 to 5,
**characterized in that** the hinge (38) comprises at least one hinge element (46a, 46b), which comprises a first fastening portion (48) connectable to the second aircraft interior component (14), a second fastening portion (50) connectable to the third aircraft interior component (16), a connection portion (54) connectable to the second connection device (56) of the retaining element (26, 28) and/or a retaining portion (52) connectable to the hinge film (40) of the hinge (38).

7. Interior component carrier system according to claim 5 or 6,
**characterized in that** the hinge (38) comprises at least one stiffening element (45), which is connected to the hinge film (40), extends along at least a portion of the longitudinal axis (L) of the hinge (38) and is connectable to the second or the third aircraft interior component (14, 16).

8. Aircraft interior component module (100) comprising:
- an interior component carrier system (22) according to one of claims 1 to 7,
- a first aircraft interior component (12), which is connected by means of the first connection device (30) to at least one retaining element (26, 28) of the retaining system (24) of the interior component carrier system (22),
- a second aircraft interior component (14), which is connected by the hinge (38) of the interior component carrier system (22) in such a way to a third aircraft interior component (16) that the third aircraft interior component (16) is pivotable about the longitudinal axis (L) of the hinge (38) relative to the second aircraft interior component (14), wherein the second connection device (56) provided on the retaining element (26, 28) of the retaining system (24) of the interior component carrier system (22) is connected to the hinge (38) and/or to a region of the second and/or the third aircraft interior component (14, 16) that is adjacent to the hinge (38) in order to fasten the second and the third aircraft interior component (14, 16) to the retaining element (26, 28), and wherein the aircraft interior component module (10) is fastenable to an aircraft structure by means of the structural retainer (80) provided on the retaining element (26, 28) of the retaining system (24) of the interior component carrier system (22).

9. Aircraft interior component module according to claim 8,
**characterized by** a fourth aircraft interior component (68), which is connected by means of the third connection device (62) to the retaining element (26, 28) of the retaining system (24) of the interior component carrier system (22), and/or a fifth aircraft interior component (78), which is connected by means of the fourth connection device (70) to the retaining element (26, 28) of the retaining system (24) of the interior component carrier system (22).

10. Aircraft interior component module according to claim 8 or 9,
**characterized in that** a first retaining element (26) of the retaining system (24) is fastened by means of the first connection device (30) of the first retaining element (26) to a first side wall (32) of the first aircraft interior component (12) and a second retaining element (28) of the retaining system (24) is fastened by means of the first connection device (30) of the second retaining element (28) to a second side wall of the first aircraft interior component (12) that lies opposite the first side wall (32), wherein the first and the second retaining element (26, 28) of the retaining system (24) extend substantially parallel to one another.

11. Aircraft interior component module according to claim 10,
**characterized in that** the second, the third, the fourth and/or the fifth aircraft interior component (14, 16, 68, 78) is/are connected to the first retaining element (26) by means of a connection device (56, 62, 70) of the first retaining element (26) that is mounted on a first lateral surface (34) of the first retaining element (26), and that the second, the third, the fourth and/or the fifth aircraft interior component (14, 16, 68, 78) is/are connected to the second retaining element (28) by means of a connection device (56, 62, 70) of the second retaining element (28) that is mounted on a first lateral surface (36) of the second retaining element (28), wherein the first lateral surface (34) of the first retaining element (26) faces the first lateral surface (36) of the second retaining element (28).

12. Aircraft interior component module according to one of claims 8 to 11,
**characterized in that** the first aircraft interior component (12) is an overhead luggage compartment, the second aircraft interior component (14) is a cove light panel, the third aircraft interior component (16) is a window panel that is constructed preferably integrally with a dado panel, the fourth aircraft interior component (68) is a lighting element and/or the fifth aircraft interior component (78) is an air outlet element of an aircraft air conditioning system.

13. Aircraft interior component module according to one of claims 8 to 12,
**characterized in that** the hinge film (40) of the hinge (38), configured in the form of a film hinge, of the interior component carrier system (22) extends along an assembly gap between the second and the third aircraft interior component (14, 16) and substantially completely covers the assembly gap, that at least one hinge element (46a, 46b) of the hinge (38) is connected by means of the first fastening portion (48) of the hinge element (46a, 46b) to the second aircraft interior component (14) and by means of the second fastening portion (50) of the hinge element (46a, 46b) to the third aircraft interior component (16) and/or that at least one stiffening element (45) of the hinge (38) that is connected to the hinge film (40) is connected along at least a portion of the longitudinal axis (L) of the hinge (38) to the second or the third aircraft interior component (14, 16).

14. Aircraft interior component module according to one of claims 8 to 13,
**characterized in that** a further structural retainer (82) is provided on the third aircraft interior component (16) for connecting the third aircraft interior component (16) to the aircraft structure.

15. Method of assembling an aircraft interior component module (10) in an aircraft, comprising the steps:
- preassembling an aircraft interior component module (10) according to one of claims 8 to 14 outside of the aircraft,
- transporting the aircraft interior component module (10) into a final assembly position in a fuselage element,
- fastening the aircraft interior component module (10) to an aircraft structure by means of the structural retainer (80) of the interior component carrier system (22).

## Revendications

1. Système de support d'éléments intérieurs (22) à utiliser lors du montage d'éléments intérieurs (12, 14, 16, 68, 78) dans un aéronef, comprenant :
- un système de fixation (24) présentant au moins un élément de fixation (26, 28), un premier dispositif d'assemblage (30) étant prévu pour relier l'élément de fixation (26, 28) à un premier élément intérieur d'aéronef (14), et une fixation de structure (80) étant en outre prévue sur l'élément de fixation (26, 28) pour la fixation de l'élément de fixation (26, 28) à une structure d'aéronef, **caractérisé par** un deuxième dispositif d'assemblage (56) et par une charnière (38) apte à être assemblée à un deuxième et à un troisième élément intérieur d'aéronef (14, 16) de telle sorte que le troisième élément intérieur (16) peut pivoter autour d'un axe longitudinal (L) de la charnière (38) par rapport au deuxième élément intérieur d'aéronef (14), le deuxième dispositif d'assemblage (56) placé sur l'élément de fixation (26, 28) étant conçu de manière à être assemblé avec la charnière (38) et/ou avec une zone du deuxième et/ou du troisième élément intérieur d'aéronef (14, 16) voisine de la charnière (38).

2. Système de support d'éléments intérieurs selon la revendication 1,
**caractérisé en ce qu'**un troisième dispositif d'assemblage (62) pour relier l'élément de fixation (26, 28) à un quatrième élément intérieur d'aéronef (68) et/ou un quatrième dispositif d'assemblage (70) pour relier l'élément de fixation (26, 28) à un cinquième élément intérieur d'aéronef (78) sont en outre prévus sur l'élément de fixation (26, 28).

3. Système de support d'éléments intérieurs selon la revendication 1 ou 2,
**caractérisé en ce que** le système de fixation (24) comprend au moins deux éléments de fixation (26, 28) qui s'étendent pour l'essentiel parallèlement l'un par rapport à l'autre lorsque le système de fixation (24) est assemblé avec le premier élément intérieur d'aéronef (12), la charnière (38), le deuxième et/ou le troisième élément intérieur d'aéronef (14, 16), au moins un dispositif d'assemblage (56, 62, 70) prévu sur le premier élément de fixation (26) étant placé sur une première face latérale (34) du premier élément de fixation (26), laquelle est tournée vers une première face latérale (36) du deuxième élément de fixation (28) lorsque le système de fixation (24) est assemblé avec le premier élément intérieur d'aéronef (12), la charnière (38), le deuxième et/ou le troisième élément intérieur d'aéronef (14, 16), et sur laquelle est placé un dispositif d'assemblage (56, 62, 70) correspondant, prévu sur le deuxième élément de fixation (28).

4. Système de support d'éléments intérieurs selon l'une des revendications 1 à 3,
**caractérisé en ce que** le premier dispositif d'assemblage (30) consiste en un dispositif d'assemblage pour relier l'élément de fixation (26, 28) à un compartiment à bagage situé au-dessus de la tête des passagers, le deuxième dispositif d'assemblage (56) en un dispositif d'assemblage pour relier l'élément de fixation (26, 28) à une charnière (38) assurant la liaison entre un panneau à éclairage indirect et un panneau de fenêtre, à une zone du panneau à éclairage indirect et/ou à une zone du panneau de fenêtre voisines de la charnière (38), le troisième dispositif d'assemblage (62) en un dispositif d'assemblage pour relier l'élément de fixation (26, 28) à un élément d'éclairage, et/ou le quatrième dispositif d'assemblage (70) en un dispositif d'assemblage pour relier l'élément de fixation (26, 28) à un élément de sortie d'air d'un système de conditionnement d'air d'aéronef.

5. Système de support d'éléments intérieurs selon l'une des revendications 1 à 4,
**caractérisé en ce que** la charnière (38) est réalisée sous la forme d'une charnière souple qui comprend une bande mince de charnière (40) s'étendant le long de l'axe longitudinal (L) de la charnière (38).

6. Système de support d'éléments intérieurs selon l'une des revendications 1 à 5,
**caractérisé en ce que** la charnière (38) comprend au moins un élément de charnière (46a, 46b) qui comprend un premier segment de fixation (48) apte à être assemblé au deuxième élément intérieur d'aéronef (14), un deuxième segment de fixation (50) apte à être assemblé au troisième élément intérieur d'aéronef (16), un segment de jonction (54) apte à être assemblé au deuxième dispositif d'assemblage (56) et/ou un segment de fixation (52) apte à être assemblé à la bande mince (40) de la charnière (38).

7. Système de support d'éléments intérieurs selon la revendication 5 ou 6,
caractérisé én ce que la charnière (38) comprend au moins un élément de renforcement (45) relié à la bande mince de charnière (40), lequel s'étend le long d'au moins un segment de l'axe longitudinal (L) de la charnière (38) et peut être relié au deuxième et au troisième élément intérieur d'aéronef (14, 16).

8. Module d'éléments intérieurs d'aéronef (10), comprenant :
- un système de support d'éléments intérieurs (22) selon l'une des revendications 1 à 7,
- un premier élément intérieur d'aéronef (12) qui est relié à au moins un élément de fixation (26, 28) du système de fixation (24) du système de support d'éléments intérieurs (22) au moyen du premier dispositif d'assemblage (30),
- un deuxième élément intérieur d'aéronef (14) qui est relié de telle sorte à un troisième dispositif intérieur d'aéronef (16) par le biais de la charnière (38) que le troisième élément intérieur d'aéronef (16) peut pivoter autour de l'axe longitudinal (L) de la charnière (38) par rapport au deuxième élément intérieur d'aéronef (14), le deuxième dispositif d'assemblage (56) prévu sur l'élément de fixation (26, 28) du système de fixation (24) du système de support d'éléments intérieurs (22) étant relié à la charnière (38) et/ou à une zone du deuxième et/ou du troisième élément intérieur d'aéronef (14, 16) voisine de la charnière (38) afin de fixer le deuxième et le troisième élément intérieur d'aéronef (14, 16) à l'élément de fixation (26, 28), et le module d'éléments intérieurs d'aéronef (10) étant apte à être assemblé à une structure d'aéronef au moyen de la fixation de structure (80) prévue sur l'élément de fixation (26, 28) du système de fixation (24) du système de support d'éléments intérieurs (22).

9. Module d'éléments intérieurs d'aéronef selon la revendication 8,
**caractérisé par** un quatrième élément intérieur d'aéronef (68) qui est relié à l'élément de fixation (26, 28) du système de fixation (24) du système de support d'éléments intérieurs (22) au moyen d'un troisième dispositif d'assemblage (62), et/ou par un cinquième élément intérieur d'aéronef (68) qui est relié à l'élément de fixation (26, 28) du système de fixation (24) du système de support d'éléments intérieurs (22) au moyen d'un quatrième dispositif d'assemblage (70).

10. Module d'éléments intérieurs d'aéronef selon la revendication 8 ou 9,
**caractérisé en ce qu'**un premier élément de fixation (26) du système de fixation (24) est fixé sur une première paroi latérale (32) du premier élément intérieur d'aéronef (12) au moyen du premier dispositif d'assemblage (30) du premier élément de fixation (26) et qu'un deuxième élément de fixation (28) du système de fixation (24) est fixé sur une deuxième paroi latérale du premier élément intérieur d'aéronef (12) située à l'opposé de la première paroi latérale (30) au moyen du premier dispositif d'assemblage (30) du deuxième élément de fixation (26), le premier et le deuxième élément de fixation (26, 28) du système de fixation (24) s'étendant pour l'essentiel parallèlement l'un par rapport à l'autre.

11. Module d'éléments intérieurs d'aéronef selon la revendication 10,
**caractérisé en ce que** le deuxième, le troisième, le quatrième et/et ou le cinquième élément intérieur d'aéronef (14, 16, 68, 78) est/sont relié(s) au premier élément de fixation (26) au moyen d'un dispositif d'assemblage (56, 62, 70) du premier élément de fixation (26), lequel dispositif d'assemblage est monté sur une première face latérale (34) du premier élément de fixation (26), et **en ce que** le deuxième, le troisième, le quatrième et/et ou le cinquième élément intérieur d'aéronef (14, 16, 68, 78) est/sont relié(s) au deuxième élément de fixation (28) au moyen d'un dispositif d'assemblage (56, 62, 70) du deuxième élément de fixation (28), lequel dispositif d'assemblage est monté sur une première face latérale (36) du deuxième élément de fixation (28), la première face latérale (34) du premier élément de fixation (26) étant tournée vers la première face latérale (36) du deuxième élément de fixation (28).

12. Module d'éléments intérieurs d'aéronef selon l'une des revendications 8 à 11,
**caractérisé en ce que** le premier élément intérieur d'aéronef (12) consiste en un compartiment à bagage situé au-dessus de la tête des passagers, le deuxième élément intérieur d'aéronef (14) en un panneau à éclairage indirect, le troisième élément intérieur d'aéronef (16) en un panneau de fenêtre réalisé de préférence d'une seule pièce à partir d'un panneau Dado, le quatrième élément intérieur d'aéronef (68) en un élément d'éclairage, et/ou le cinquième élément intérieur d'aéronef (78) en un élément de sortie d'air d'un système de conditionnement d'air d'aéronef.

13. Module d'éléments intérieurs d'aéronef selon l'une des revendications 8 à 12,
**caractérisé en ce que** la bande mince (40) de la charnière (38) du système de support d'éléments intérieurs (22), réalisée sous la forme d'une charnière souple, s'étend le long d'une fente de montage, entre le deuxième et le troisième élément intérieur d'aéronef (14, 16), et recouvre pour l'essentiel complètement la fente de montage, **en ce qu'**au moins un élément de charnière (46a, 46b) de la charnière (38) est relié au deuxième élément intérieur d'aéronef (14) au moyen du premier segment de fixation (48) de l'élément de charnière (46a, 46b) et au troisième élément intérieur d'aéronef (16) au moyen du deuxième segment de fixation (50) de l'élément de charnière (46a, 46b), et/ou **en ce qu'**au moins un élément de renforcement (45) de la charnière (38) relié à la bande mince (40) de la charnière (38), le long d'au moins un segment de l'axe longitudinal (L) de la charnière (38), est relié au deuxième ou au troisième élément intérieur d'aéronef (14, 16).

14. Module d'éléments intérieurs d'aéronef selon l'une des revendications 8 à 13,
**caractérisé en ce qu'**il est prévu sur le troisième élément intérieur d'aéronef (16) une fixation de structure (82) supplémentaire pour relier le troisième élément intérieur d'aéronef (16) à la structure d'aéronef.

15. Procédé de montage d'un module d'éléments intérieurs d'aéronef (10) dans un aéronef, comprenant les étapes suivantes :
- le pré-montage d'un module d'éléments intérieurs d'aéronef (10) selon l'une des revendications 8 à 14 à l'extérieur de l'aéronef,
- le transport du module d'éléments intérieurs d'aéronef (10) pour l'amener dans une position de montage finale dans un élément de fuselage d'aéronef,
- la fixation du module d'éléments intérieurs d'aéronef (10) sur une structure d'aéronef au moyen de la fixation de structure (80) du système de support d'éléments intérieurs (22).
